# EUROPEAN PATENT APPLICATION

(11) **EP 0 617 302 A1**
(43) Date of publication of application: **28.09.1994**
(21) Application number: 94104247.5
(22) Date of filing: 18.03.1994
(51) Int. Cl.: G02B 6/38

(54) **Optical fiber protective sleeve**

(30) Priority: 26.03.1993 FR 9303524
(71) Applicant: Corning Incorporated, Corning New York 14831 (US)
(72) Inventor: Malacarne, Fabien, Corning, NY 14831 (US); Delarue, Gerard, Corning, NY 14831 (US)
(74) Representative: Aron, Georges

(57) **Abstract**

A device in which each optical fiber (4) extends beyond a free end of a protecting tube (5). The device comprises a removable tubular protective sleeve (8) passed over the bare part of the fiber and slipped over an adjacent part of the tube (5) in order to be held back by friction on it and to protect the bare part of the fiber (4).

## Description

### Background of the Invention

The present invention relates to an optical device with optical fibers extending beyond a free end of protective tubes, and a protective sleeve for such a device.

For installing telecommunication networks with optical fibers, it has been proposed to use approximately parallelepiped cassettes conceived to protect and to allow handling of optical components such as, for example, a 1xN coupler embodied in integrated optics.

The optical fibers connected to such a component extend out of the cassette together and are partially protected, outside the cassette, by flexible tubes, each one wrapping one fiber, on part of its length only. The free end of each fiber preferably extends beyond the free end of each associated tube so it can be connected to other optical components or fibers. However, before undertaking this connecting operation, this part of the fiber must be protected, as it is particularly fragile when its end is bared and prepared in order to prevent parasitic reflections.

One could extend the protective tube to the end of the fiber and just before a connecting operation, shortening the tube without touching the fiber, by a specialized cutting tool. The disadvantage is that the protective tube makes the fiber inaccessible and prevents any test or optical checking before baring the fiber.

Moreover, the fiber end face is usually cut at a 10° ± 1° angle for example, from a plane normal to the axis of the fiber, in order that an optical signal arriving on this face can't be reflected on the face inside the fiber following the fiber axis and thus disturb the functioning of the optical component to which the fiber is connected when in active mode. Great care must be taken to avoid the deposition of any pollutant product (water, dust, etc...) on this end face, that would again produce the undesirable reflection.

The present invention has therefore as its aim to provide a device with optical fibers incorporating means for protecting the fibers which does not present this drawback and ensures adequate protection for these fibers against pollutants and to provide a protective sleeve for the fibers in such device.

These and other objects of the invention, appearing from the description, are achieved with an optical device provided with at least one optical fiber passing through a protective tube and extending beyond a free end of this tube, which comprises a removable tubular protective sleeve passed over the bare part of the fiber and slipped over an adjacent part of the protective tube in order to be held back by friction on it and to protect the bare part of the fiber.

The tubular protective sleeve of the device in accordance with the invention efficiently protects the end of the fiber from any polluting agent and can conveniently be removed, without any tool, when it is wished to proceed to the connecting of the fiber that it protects.

According to a preferred method of providing the protective sleeve following the invention, the protective sleeve is constituted of a flexible tubular component with a greater length than the length of the bare part of the fiber and with an inner diameter complementary to the outer diameter of the tube protecting the fiber. It is closed at one end to completely protect the fiber.

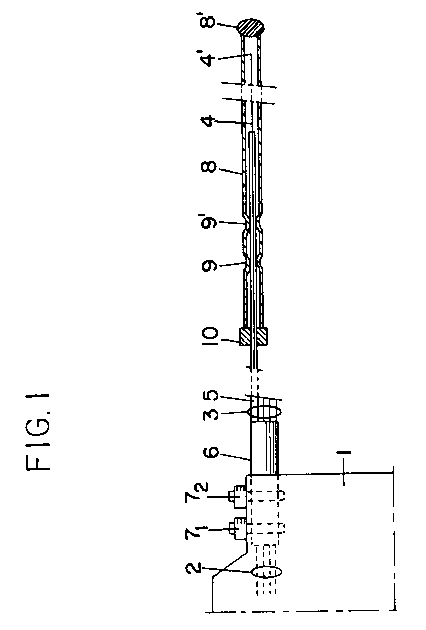

Other characteristics and advantages of the present invention will appear upon reading the following description and upon examination of the attached drawing, where the sole figure schematically represents in a partial cross-section view, the device and the protective sleeve in accordance with the invention.

In this figure, a cassette 1 containing an optical component (not represented) connected to optical fibers has been partially represented. For illustration purpose only, as seen above, this component can be constituted by a 1xN coupler embodied in integrated optics.

The (N+1) fibers 2 are gathered and positioned in the cassette towards a bundle 3 of flexible protective tubes designed so that each one receives one of the fibers. In this way, a fiber 4, single mode for example, with a diameter of 0.25mm can be received in a tube 5 with an inner diameter of about 0.5mm, and an outer diameter of about 1mm. As represented in the figure, the adjacent ends of the tubes of the bundle are packed into a short protective tube 6 and attached to the cassette 1 by straps 7₁, 7₂ for example.

In order to make the drawing clearer, only the end of the fiber 4 has been represented. It extends beyond the tube 5 for a few tens of centimeters for example, while the tube 5 protects the rest of the fiber for several meters, for example. The terminal face 4' of the fiber 4 is cut in order to be angled over the longitudinal axis of the fiber for the reasons explained at the beginning of the present description.

The bare part of the fiber 4, and its endface 4' require a temporary protection, at least from the time when the cassette 1 is installed in an optical fiber telecommunication network, and until the time when the connection of the fiber to another fiber or another optical component is carried out.

According to the present invention, this protection is ensured with the help of a tubular protective sleeve 8 slipped onto the end of the fiber and the contiguous part of its protective tube 5. To do so, the protective sleeve must have a greater length than that of the bare part of the fiber, and an inner diameter of the order of the outer diameter of the protective tube of this fiber, so that it is capable of being forcibly slid into place over the outside of this tube.

Besides, the protective sleeve presents the following various advantageous characteristics that appear in the figure, where the diameter of the protective sleeve has been exaggerated for the clarity of the drawing.

First, it is sealed at its end 8' opposite the end by which it is slipped onto the fiber and onto the tube protecting the fiber. In this way, the end face 4' of the fiber is perfectly protected against atmospheric polluting agents or others, such as water. The protective sleeve can be obtained by cutting up a plastic tube, and the end of the protective sleeve can easily be sealed by hot welding.

The protective sleeve 8 can present one or several pinched spots 9, 9' spaced out on the part of the protective sleeve 8 meant to pass over the tube 5. These pinched spots can be easily prepared by heating the plastic tube used to constitute the protective sleeve, in order to locally reduce its inner diameter to a value slightly lower than the outer diameter of the protecting tube. They permit reinforcement of the friction of the protective sleeve on the tube 5, and thus their temporary connection.

Still with great advantage, one places on the tube 4, at a distance from the end face 4' of the fiber less than the length of the protective sleeve, a stop 10 against which this protective sleeve 8 rests when installed on the fiber and on the associated tube, in order to prevent that the welded end 8' of the protective sleeve comes to rest against the end face of the fiber. This stop 10 can be simply constituted by a collar forced onto the tube 5. It can advantageously have a marker on it identifying the fiber contained in the tube. However it is easily removed by being slipped over the tube when it is necessary to re-cut the tube with a specialized tool.

The protective sleeve of the device in accordance with the invention solves the above-mentioned problems. If sleeve is easily installed and removed, without any tool, while it ensures a total temporary protection of the bared part of the fiber that it protects, and notably of its end face 4'. A protection for this face is particularly necessary when the fiber is connected to an active device, in which optical signals circulate, because the end face of the fiber should not axially reflect optical signals that are received, and signals could disturb the upstream functioning of the device. The protective sleeve of the device in accordance with the invention efficiently protects an end face of a fiber, angled in order to prevent such reflections, from any disruptive polluting agent.

## Claims

1. An optical device provided with at least one optical fiber (4) passing through a protective tube (5) and extending beyond a free end of this tube, characterized in that it comprises a removable tubular protective sleeve (8) passed over the bare part of the fiber and slipped over an adjacent part of the tube (5) in order to be held back by friction on it and to protect the said bare part of the fiber (4).

2. A device according to claim 1, characterized in that the free end of the fiber is cut following a face (4') angled over the axis of the fiber (4), in order to prevent any reflection of optical signals inside the fiber following the fiber axis.

3. A device according to any one of claims 1 and 2, characterized in that a stop (10) is placed on the protective tube (5) of the fiber (4) in order to stop the end of the part of the protective sleeve (8) that is slipped over the tube (5) in a predetermined position.

4. A device according to claim 3, characterized in that the stop (10) is removable.

5. A device according to any one of claims 2 to 4, where optical signals circulate in the fiber (4) protected by the protective sleeve (8).

6. A protective sleeve for an optical fiber being part of the device according to any one of claims 1 to 5, characterized in that it is constituted by a flexible tubular component (8) with a greater length than that of the bare part of the fiber and with an inner diameter complementary to the outer diameter of the protective tube (5).

7. A protective sleeve according to claim 6, characterized in that it is closed at one end (8').

8. A protective sleeve according to any one of claims 6 and 7, characterized in that it presents at least one pinched spot (9, 9'), in order to increase its friction on the tube (5) protecting the fiber (4) on which it is to be installed.
